# EUROPÄISCHE PATENTSCHRIFT

(11) **EP 2 978 726 B1**
(45) Veröffentlichungstag und Bekanntmachung des Hinweises auf die Patenterteilung: **25.07.2018**
(21) Anmeldenummer: 14712642.9
(22) Anmeldetag: 21.03.2014
(51) Int. Cl.: C04B 28/06, F16L 58/06

(54) **KORROSIONSSCHUTZ FÜR GUSSROHRE**
CORROSION PROTECTION FOR CAST IRON PIPES
PROTECTION CONTRE LA CORROSION POUR DES TUYAUX EN FONTE

(30) Priorität: 25.03.2013 DE 102013103038
(43) Veröffentlichungstag der Anmeldung: 03.02.2016
(73) Patentinhaber: Duktus Rohrsysteme Wetzlar GmbH, 35576 Wetzlar (DE)
(72) Erfinder: KARAU, Friedrich, 35578 Wetzlar (DE)
(74) Vertreter: Patentanwälte Olbricht Buchhold Keulertz
(86) Internationale Anmeldenummer: PCT/EP2014/055684
(87) Internationale Veröffentlichungsnummer: WO 2014/154573

(56) Entgegenhaltungen:
- EP-A1- 0 526 354
- DE-A1- 2 620 669
- DE-C- 832 799
- FR-A1- 2 784 048
- US-A- 5 955 162
- J. Stark & B. Wicht: "Zement und Kalk", 31. Dezember 2000 (2000-12-31), Birkhäuser, Basel Boston berlin, XP002727784, ISBN: 3-7643-6216-2 Seiten 123-125, Seite 123 - Seite 125; Abbildung 2.8.8
- K.L. Scrivener & A. Capmas: "Calcium Aluminate Cements" In: P. C. Hewlett: "Lea's Chemistry of Cement and Concrete", 31. Dezember 2002 (2002-12-31), Butterworth Heinemann, Oxford, XP002727785, ISBN: 0-340-56589-6 Seiten 716-719, Seite 716 - Seite 719; Abbildungen 13.2, 13.3
- EL-HEMALY ET AL: "Evaluation of the internal high alumina cement mortar lining of ductile cast iron pipes used in sewage transportation", MATERIALS AND DESIGN, LONDON, GB, Bd. 29, Nr. 6, 1. Januar 2008 (2008-01-01) , Seiten 1280-1283, XP022546660, ISSN: 0261-3069, DOI: 10.1016/J.MATDES.2007.05.001

## Beschreibung

Die vorliegende Erfindung betrifft korrosionsgeschützte duktile Gussrohre, Verfahren zu deren Herstellung sowie die Verwendung spezifischer Zusammensetzungen zur Herstellung von korrosionsgeschützten duktilen Gussrohren.

Duktile gemuffte Gussrohre bei denen es sich um Rohre aus Gusseisen handelt, werden schon seit langem, z.B. für Trinkwasser und Abwasserleitungen, verwendet. Aufgrund dessen, dass diese bei ihrer Verwendung in den meisten Fällen unterirdisch verlegt werden und somit konstant mit einer korrodierenden Umgebung, d.h. dem feuchten Erdreich in Berührung stehen, sowie dahingehend, dass diese im Gebrauch mit potentiell korrodierenden Materialien, im Falle von Trinkwasser, sauerstoffhaltigem, im Falle von Mineralwasser ggf. saurem Wasser und im Falle von Abwasser mit Wasser, das ggf. noch weitere korrodierende Substanzen, z.B. biologischen Ursprungs, enthält, in Berührung kommen, müssen duktile Rohre zur Verlängerung ihrer Lebensdauer mit einem Korrosionsschutz versehen werden.

Zurzeit werden auf dem Fachgebiet hauptsächlich zwei Verfahren verwendet, um Korrosionsschutz für duktile Rohre bereitzustellen. Das erste Verfahren beruht darauf, dass die Rohre in einem ersten Schritt mit einer elektrochemisch aktiven Schicht üblicherweise aus Zink und in einem zweiten Schritt mit einer zweiten Schutzschicht z.B. aus Bitumen oder aus Kunstharz überzogen werden, wobei Letztere üblicherweise aus Epoxidharzen, aber auch aus Polyurethan besteht. Eine Abwandlung dieses Verfahrens zum Korrosionsschutz besteht darin, die Rohre ohne vorherige Verzinkung mit einer Bitumenschicht oder einer Polymerschicht zu überziehen, die aus den oben erwähnten Werkstoffen oder auch aus Polyethylen oder Ähnlichem bestehen kann.

Dieses Verfahren hat zwar den Vorteil, dass der Korrosionsschutz mit sehr dünnen Schichten erreicht werden kann, was zum einen im Hinblick auf Gewichtszunahme der Röhren sowie auch die Weiterverarbeitung, insbesondere bei der Verwendung längskraftschlüssiger Dichtungs- und Verbindungsysteme vorteilhaft ist, hat aber gleichzeitig den Nachteil, dass die so erreichten Schichten eine relativ geringe Resistenz gegen mechanische Belastungen, wie z.B. Schläge, aber auch schnittartige Verletzungen, zeigen, so dass bei der Verarbeitung solcher Rohre eine erhöhte Vorsicht vonnöten ist, da selbst eine Verletzung des Korrosionsschutzes in einem relativ kleinen Bereich dazu führen kann, dass das Rohr innerhalb einer deutlich kürzeren Zeit wie die zu erwartende Lebensdauer korrodiert und somit leckt oder platzt. Ferner hat es den Nachteil, dass bei der Herstellung mitunter beträchtliche Lösungsmittelemissionen entstehen können. Die Beschichtung mit einem Polymer, ohne zuvor erfolgte Verzinkung hat ferner den Nachteil, dass zum Aufbringen eines haftbeständigen Korrosionsschutzes die Rohre nach ihrer Herstellung sandgestrahlt oder in einer angemessenen Form chemisch gebeizt, oder in anderer Weise aufwändig vorbereitet werden müssen, was das Verfahren aufwändiger und damit auch teurer macht.

Ein zweites Verfahren zum Bereitstellen eines Korrosionsschutzes auf duktilen Gussrohren besteht im Aufbringen einer Schicht eines Zementmörtels, wobei ggf. besonders an der Außenseite zwischen dem Zementmörtel und dem Gussrohr, wiederum eine elektrochemisch aktive Schicht aufgebracht werden kann,

Auch wenn dieses Verfahren zu Beschichtungen führt, die eine deutlich höhere mechanische Belastbarkeit aufweisen, wie dieses bei Polymerbeschichtungen der Fall ist, hat dieses Verfahren den Nachteil, dass die dabei benötigen Schichten im Hinblick auf die benötigte mechanische Stabilität aber auch die Porosität des Zementmörtels relativ dick sind und dass, z.B. bei der Verwendung von Steckmuffenverbindungen, an den Enden von Rohren, die Beschichtung wieder entfernt werden muss, was wiederum den Verarbeitungsaufwand deutlich erhöht.

Im Hinblick auf das oben Gesagte wäre es daher wünschenswert, wenn ein Verfahren zur Verfügung stünde mit dem duktile Gussrohre mit einer korrosionsschützenden Schicht umgeben werden können, die eine bessere mechanische Stabilität aufweist, wie dieses mit den polymerbasierten Verfahren zu erreichen ist, jedoch gleichzeitig zu einer dünneren Schicht führt, wie dieses mit den zurzeit bekannten konventionellen Zementmörtelverfahren der Fall ist.

In der EP 0 526 354 A1 wird ein flexibler Mörtel zum Abdichten der inneren und/oder äußeren Beschichtung von Bauteilen offenbart. Die FR 2 784 048 A1 offenbart ein mit einer Zementzusammensetzung beschichtetes Rohr.

Es hat sich nun überraschenderweise gezeigt, dass unter Verwendung von latexmodifizierten Zementmörteln auf Basis von Calcium-Aluminium-Zementen eine auf duktilen Gussrohren anhaftende korrosionsschützende Schicht gebildet werden kann, die insbesondere praktisch rissfrei und wenig porös ist, so dass diese Schichten in deutlich geringerer Dicke aufgetragen werden können, wie dieses bei herkömmlichen Zementmörtelschichten der Fall ist. Die Beschichtungen auf Basis von latexmodifizierten Zementmörteln auf Basis von Calcium-Aluminium-Zementen zeigen außerdem eine hervorragende Anhaftung an Oberflächen duktiler Gussrohre, insbesondere an den aus dem Gussverfahren resultierenden Zunderschichten, so dass diese auch ohne weitere Behandlung auf duktile Gussrohre aufgebracht werden können und dort eine hervorragende Haftung zeigen. Die Beschichtungen auf Basis von latexmodifizierten Zementmörteln zeigen ferner auch eine hervorragende Anhaftung an verzinkte Oberflächen. Die so hergestellten Schichten zeigen ferner auch hervorragende mechanische Eigenschaften, insbesondere eine hohe Elastizität, Schlagbeständigkeit und Rissbeständigkeit so dass diese auch den üblichen Belastungen, wie diese beim Verlegen von Rohren ausgeübt werden, gut widerstehen. Ferner hat sich gezeigt, dass die so hergestellten Schichten eine höhere thermische Stabilität zeigen und Temperaturen bis zu 150 °C widerstehen können.

Abschließend ist noch zu sagen, dass mit latexmodifizierten Zementmörteln auf Basis von Calcium-Aluminium-Zementen, korrosionsschützende Schichten erreicht werden können, die dünn genug sind, dass die Rohre ohne Entfernung der korrosionsschützenden Schicht mit Steckmuffen verwendet werden können, so dass diese sich auch beim Verlegen als einfach zu verarbeiten erwiesen haben.

In einem Aspekt betrifft die Erfindung somit ein duktiles Gussrohr, das auf zumindest einem Teil der inneren und/oder äußeren Mantelfläche eine Beschichtung aus einem latexmodifizierten Zementmörtel aufweist, wobei der latexmodifizierte Zementmörtel ein Zementmörtel auf Basis von Calcium-Aluminium-Zement ist, der bezogen auf 100 Massen-% trockener Zement Folgendes aufweist:
zumindest 5-35 Massen-% CaAl₂O₄
zumindest 5-35 Massen-% Ca₃Al₂O₆
mindestens 20 Massen-% eines anorganischen Füllstoffs
ggf. ein oder mehrere weitere Aluminate, sowie
ggf. Hilfsstoffe, Nebenphasen und amorphe Anteile.

In einem weiteren Aspekt betrifft die Erfindung ein Verfahren zur Herstellung des erfindungsgemäßen beschichteten duktilen Gussrohrs, das die folgenden Schritte aufweist, nämlich,
Bereitstellen eines duktilen Gussrohrs und
Beschichten zumindest eines Teils der inneren und/oder äußeren Mantelfläche des duktilen Gussrohrs mit dem latexmodifizierten Zementmörtel

In einem weiteren Aspekt betrifft die Erfindung somit die Verwendung eines latexmodifizierten Zementmörtels zur Beschichtung von duktilen Gussrohren, wobei der latexmodifizierte Zementmörtel ein Zementmörtel auf Basis von Calcium-Aluminium-Zement ist, der bezogen auf 100 Massen-% trockener Zement Folgendes aufweist:
zumindest 5-35 Massen-% CaAl₂O₄
zumindest 5-35 Massen-% Ca₃Al₂O₆
mindestens 20 Massen-% eines anorganischen Füllstoffs
ggf. ein oder mehrere weitere Aluminate, sowie
ggf. Hilfsstoffe, Nebenphasen und amorphe Anteile.

Bei dem in der Erfindung verwendeten Gussrohr kann es sich um jedes dem Fachmann bekannte Gussrohr handeln. Es kann sich hierbei um ein direkt nach dem Guss erhaltenes Rohr, wie auch um ein weiterverarbeitetes Rohr, z.B. ein gebeiztes oder sandgestrahltes Rohr oder ein Rohr, das mit einer elektrochemisch aktiven Schicht versehen wurde handeln.

Der Ausdruck "Latex" bezeichnet im Rahmen der Erfindung eine kolloidale Suspension oder Dispersion von Polymerpartikeln im Wasser. Üblicherweise enthält ein Latex etwa 50 Gew.-%, in etwa sphärische Polymerpartikel in einem Größenbereich von 0,01 µm bis etwa 1 µm. Die im Latex verwendeten Polymere können sowohl elastomerische wie auch thermoplastische Polymere sein, wobei im Allgemeinen elastomeri sche Polymere bevorzugt sind. Die in dem Latex verwendeten Polymere können sowohl natürlichen als auch synthetischen Ursprungs sein. Beispiele für solche im Rahmen der Erfindung zur Herstellung eines Latexes geeignete Polymere, schließen Folgendes ein, sind aber nicht darauf beschränkt, nämlich Polyacrylate, Polymere und Copolymere auf Butadienbasis wie bspw. Styrolbutadien-, oder Butadienacrylat-Copolymere, Polymere und Copolymere aus Styrolbasis wie bspw. Styrolacrylate-Copolymere, Polyisoprenkautschuke sowie Polychloroprenkautschuke. In einigen Ausführungsformen der Erfindung kann es bevorzugt sein, wenn es sich bei dem Latex um einen Latex auf Basis Polyisopren- bzw. Polychloroprenkautschuk handelt.
Butadienbasis wie bspw. Styrolbutadien-, oder Butadienacrylat-Copolymere, Polymere und Copolymere aus Styrolbasis wie bspw. Styrolacrylate-Copolymere, Polyisoprenkautschuke sowie Polychloroprenkautschuke. In einigen Ausführungsformen der Erfindung kann es bevorzugt sein, wenn es sich bei dem Latex um einen Latex auf Basis Polyisopren- bzw. Polychloroprenkautschuk handelt.

Zur Herstellung des erfindungsgemäß eingesetzten Zementmörtels wird der verwendete trockene Zement mit dem Latex vermischt, wobei ggf. weitere Zusatzstoffe zugegeben werden. Üblicherweise reicht das in dem Latex enthaltene Wasser zum Anmischen des Zementmörtels, es ist aber auch möglich, dass zusätzliches Wasser zugegeben wird.

Der Ausdruck anorganische Füllstoffe bezeichnet im Rahmen der Erfindung jegliches partikuläre, anorganische Material, das als Zuschlagsstoff für Zementmörtel geeignet ist. Üblicherweise handelt es sich bei diesem Material um ein feinkörniges Material mit einem mittleren Partikeldurchmesser von 500 µm und weniger, bevorzugt von 100 µm und weniger. Es ist aber z.B. auch möglich, dass der Füllstoff in Form von kurzen Fasern, z.B. in Form von Glasfasern oder Kohlefasern (auch als Whisker bezeichnet) vorliegt. Bei dem anorganischen Füllstoff kann es sich um ein synthetisches oder ein natürliches Material, z.B. einen mineralischen Füllstoff handeln. Beispiele für geeignete Füllstoffe schließen Folgendes ein, sind aber nicht darauf beschränkt, Quarze; Basalte; Granite; Feldspat; Füllstoffe auf Basis von Aluminium, wie beispielsweise Füllstoffe auf Basis von Aluminiumoxiden oder Alumosilicaten; Tonerden oder Tonmineralien wie beispielsweise Kaolinit, Chrysotil, Illit, Smectit, Vermiculit, Chlorit, Montmorillonit, Beidelllit, Nontronit, Saponit oder Bentonit; Füllstoffe auf Basis der Oxide von Silizium, Titan oder Bor; und Füllstoffe auf Basis der Oxide und Silicate von Zirkon. In einigen Ausführungsformen kann es bevorzugt sein, wenn der anorganische Füllstoff ein Füllstoff auf Basis von Silizium und insbesondere auf Basis von SiO₂ ist. Bei den Füllstoffen auf Basis von SiO₂ kann es sich um Füllstoffe auf Basis von amorphem SiO₂, wie beispielsweise Füllstoffe auf Basis von Kieselgur oder um Füllstoffe auf Basis von kristallinem SiO₂, wie beispielsweise Quarz, handeln.

Bei dem Zementmörtel auf Basis von Calcium-Aluminium-Zement kann es sich um ein bereits fertig gemischtes Produkt aber auch um eine spezifisch hergestellt Mischung handeln. In einigen Ausführungsformen kann die Verwendung von Tonerdezementen als Ausgangsmaterialien für die in der Erfindung verwendeten Zementmörtel auf Basis von Calcium-Aluminium-Zement vorteilhaft sein.

Zusätzlich zu den oben genannten Inhaltsstoffen kann der in der Erfindung verwendeten Zementmörtel weitere allgemein bekannte Hilfs- und Zusatzstoffe aufweisen. Beispiele dafür schließen Folgendes ein, sind aber nicht darauf beschränkt, nämlich Entschäumer, Tenside z.B. Tenside zur Stabilisierung des Latexes, Haftvermittler, verstärkende Fasern oder Polymere und Polymerpartikel.

Zum Auftragen des latexmodifizierten Zementmörtels kann jedes auf dem Fachgebiet bekannte Verfahren verwendet werden. Beispiele für solche Verfahren schließen Folgendes ein, nämlich Sprühverfahren, Gussverfahren, insbesondere Schleudergussverfahren sowie Extrusionsverfahren. An das Auftragen des Zementmörtels kann sich ggf. noch ein Schritt anschließen, in dem das duktile Gussrohr zumindest zum Teil mit einem Vliesstoffband oder einem Gewebeband, insbesondere einem Polymergewebeband umwickelt wird. In gewissen Ausführungsformen kann es bevorzugt sein, den Zementmörtel durch ein Extrusionsverfahren unter Verwendung einer Breitschlitzdüse aufzubringen. Es kann auch vorteilhaft sein, den Zementmörtel durch Sprühverfahren aufzubringen, die als "airless" Sprühverfahren bezeichnet werden.

Der Ausdruck "aufweisen" bzw. "aufweisend" bezeichnet im Rahmen der vorliegenden Erfindung eine offene Aufzählung und schließt neben den ausdrücklich genannten Bestandteilen bzw. Schritten andere Bestandteile bzw. Schritte nicht aus.

Der Ausdruck "bestehen aus" bzw. "bestehend aus" bezeichnet im Rahmen der vorliegenden Erfindung eine geschlossene Aufzählung und schließt neben den ausdrücklich genannten Bestandteilen bzw. Schritten jegliche andere Bestandteile bzw. Schritte aus.

Der Ausdruck "im Wesentlichen bestehen aus" bzw. "im Wesentlichen bestehend aus" bezeichnet im Rahmen der vorliegenden Erfindung eine teilweise geschlossene Aufzählung und bezeichnet Zusammensetzungen die neben den genannten Bestandteilen nur noch solche weiteren Bestandteile aufweisen, die den Charakter der Zusammensetzung nicht materiell verändern oder die in Mengen vorliegen, die den Charakter der Zusammensetzung nicht materiell verändern.

Wenn im Rahmen der vorliegenden Erfindung eine Zusammensetzung unter Verwendung des Ausdrucks "aufweisen" bzw. "aufweisend" beschrieben ist, schließt dies ausdrücklich Zusammensetzungen ein, die aus den genannten Bestandteilen bestehen oder im Wesentlichen aus den genannten Bestandteilen bestehen.

In einer Ausführungsform weist der Zementmörtel 15-30 Massen-% CaAl₂O₄ auf.

In einer Ausführungsform weist der Zementmörtel 5-10 Massen-% Ca₃Al₂O₆ auf.

In einer Ausführungsform weist der Zementmörtel mindestens 40 und insbesondere 60-70 Massen-% des zumindest einen anorganischen Füllstoffs auf.

Es hat sich gezeigt, dass die Verwendung von Calcium-Aluminaten und Füllstoffen in den oben genannten Bereichen zu besonders gut anhaftenden Beschichtungen führt.

In einer Ausführungsform der Erfindung ist der latexmodifizierte Zementmörtel ein Zementmörtel, der mit zumindest einem Latex modifiziert ist, der ausgewählt ist aus den Polyisoprenlatexen und den Polychloroprenlatexen.

Es hat sich gezeigt, dass die Verwendung von Polyisoprenlatexen und Polychloroprenlatexen zur Modifikation des Zementmörtels zu einer besonders stabil anhaftenden Beschichtung führt. Auch wenn die Anmelderin sich nicht darauf festlegen möchte, wird davon ausgegangen, dass die Verwendung von Polyisoprenlatexen und Polychloroprenlatexen der Beschichtung eine besonders Elastizität verleiht.

In einer weiteren Ausgestaltung der Erfindung weist der latexmodfizierte Zementmörtel ferner noch zumindest ein Melamin-Formaldehydharz auf.

Es hat sich gezeigt, dass die zusätzliche Einmischung von Melamin-Formaldehydharzen die Stabilität der erhaltenen Beschichtung weiter unterstützt, wobei die Anmelderin ohne darauf festgelegt zu sein, davon ausgeht, dass die Zugabe von Melamin-Formaldehydharz, die Rissbeständigkeit der erhaltenen Beschichtung erhöht.

In einer weiteren Ausgestaltung der Erfindung weist der latexmodfizierte Zementmörtel ferner noch zumindest einen Silan-Haftvermittler auf.

Es hat sich gezeigt, dass durch die Verwendung von Silan-Hafvermittlern die Anhaftung der Beschichtung an die duktilen Gussrohre weiter verbessert werden kann. Auch wenn die Anmelderin nicht auf irgendeine Theorie festgelegt werden möchte, geht diese davon aus, dass die Verwendung von Silan-Hafvermittlern zu einer Art Copolymerisation führt, wobei die Silane einerseits zur Anbindung an die Zementphasen und Eisenoxidphasen des Zunders befähigt sind, andererseits aber auch mit den Polymeren zu interagieren vermögen. Dies führt zu Festigkeitssteigerung und zur Erhöhung des Klebevermögens.

In einer weiteren Ausgestaltung der Erfindung weist die Beschichtung eine Dicke von höchstens 2 mm, vorzugsweise von höchsten 500 µm auf.

Es hat sich gezeigt, dass Beschichtungen dieser Dicke sowohl im Hinblick auf die Weiterverarbeitung der Rohre, wie auch eine möglichst geringe Gewichtszunahme vorteilhaft sind, ohne dass dabei der Korrosionsschutz beeinträchtigt wird.

In einer weiteren Ausgestaltung der Erfindung wird der latexmodifizierte Zementmörtel mit einem Verfahren aufgetragen, das ausgewählt ist aus der Gruppe bestehend aus den Sprühverfahren, insbesondere den "airless" Sprühverfahren, den Gussverfahren, insbesondere den Schleudergussverfahren und den Extrusionsverfahren.

Es hat sich gezeigt, dass die oben genannten Verfahren besonders zur Auftragung des Zementmörtels geeignet sind.

In einer weiteren Ausgestaltung der Erfindung schließt sich an den Schritt des Beschichtens ein Schritt des Umwickelns zumindest eines Teils des duktilen Gussrohrs mit einem Vliesstoffband oder einem Gewebeband, insbesondere einem Polymergewebeband an.

Es hat sich gezeigt, dass durch Umwickeln des beschichteten Gussrohrs mit einem Vliesstoffband oder einem Gewebeband und insbesondere einem Polymergewebeband die Widerstandsfähigkeit der Beschichtung weiter verbessert werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachstehend anhand eines Beispiels dargestellt und in der nachfolgenden Beschreibung näher erläutert.

### Beispiel 1:

Eine hydraulische abbindende mineralische Masse bestehend aus 60 Massen-% Quarz und ca. 35 % Tonerdezement (ca. 26 Massen-% CaAl₂O₄ und 7 Massen-% Ca₃Al₂O₆ bezogen auf 100 Masen-% des trockenen Zements), wobei die restlichen 5 % durch Nebenphasen ausgemacht werden, wird mit einer ausreichenden Menge eines Polychloroprenlatexes vermischt (trockener Zement/Latexdispersion im Masseverhältnis 3:1), um einen verabbeitbaren Mörtel zu erhalten. Der verwendete Latex weist 40 Gew.-% Polychloropren sowie 20 Gew.-% Melamin-Formaldehydharz auf und ist durch Zugabe von Polyoxyethylensorbitantrioleat sowie weiteren Tensiden auf Fettsäurepolyglykolesterbasis stabilisiert. Der so erhaltene Zementmörtel wird mittels Airlessverfahren auf ein nicht behandeltes duktiles Gussrohr aufgetragen und innerhalb von 3 h bei Raumtemperatur ausgehärtet. Auf diese Weise wird eine etwa 500 µm dicke rissfreie geschlossene Beschichtung erhalten, die den Anforderungen an den Korrosionsschutz für unterirdisch verlegte Rohre erfüllt.

Bei Tests zur Haftungsfestigkeit der Beschichtung an das duktile Gussrohr nach DIN EN 15189 hat sich gezeigt, dass vor einem Abreißen der Beschichtung von dem duktilen Gussrohr Risse innerhalb der Beschichtung selbst auftreten und lediglich Teile der Beschichtung abgerissen werden, wobei auf der gesamten beschichteten Oberfläche des Gussrohres noch ausreichend Beschichtungsmaterial zurückbleibt, um einen Korrosionsschutz sicherzustellen. Das demonstriert klar die überlegene Anhaftung der erfindungsgemäßen Schicht. Ebenso zeigte sich bei Untersuchungen der Schlagbeständigkeit nach DIN EN 15542, dass die erfindungsgemäße Beschichtung mit einer Schlagbeständigkeit von mehr als 175 Nm eine überlegene Schlagbeständigkeit aufweist. Letzteres ist besonders bei Bettung der Rohre mit einem grobkörnigen Bettungsmaterial vorteilhaft.

## Patentansprüche

1. Duktiles Gussrohr, **dadurch gekennzeichnet, dass** es zumindest auf einem Teil der inneren und/oder äußeren Mantelfläche eine Beschichtung aus einem latexmodifizierten Zementmörtel aufweist, wobei der latexmodifizierte Zementmörtel ein Zementmörtel auf Basis von Calcium-Aluminium-Zement ist, der bezogen auf 100 Massen-% trockenen Zement Folgendes aufweist:
5-35 Massen-% CaAl₂O₄,
5-35 Massen-% Ca₃Al₂O₆,
mindestens 20 Massen-% eines anorganischen Füllstoffs,
ggf. ein oder mehrere weitere Aluminate, sowie
ggf. Hilfsstoffe, Nebenphasen und amorphe Anteile.

2. Duktiles Gussrohr nach Anspruch 1, **dadurch gekennzeichnet, dass** der latexmodifizierte Zementmörtel bezogen auf 100 Massen-% trockenen Zement 15-30 Massen-% CaAl₂O₄ aufweist.

3. Duktiles Gussrohr nach Anspruch 1 oder 2, **dadurch gekennzeichnet, dass** der latexmodifizierte Zementmörtel bezogen auf 100 Massen-% trockenen Zement 5-10 Massen-% Ca₃Al₂O₆ aufweist.

4. Duktiles Gussrohr nach einem der Ansprüche 1 bis 3, **dadurch gekennzeichnet, dass** der latexmodifizierte Zementmörtel bezogen auf 100 Massen-% trockenen Zement mindestens 40 und insbesondere 60-70 Massen-% des zumindest einen anorganischen Füllstoffs aufweist.

5. Duktiles Gussrohr nach einem der Ansprüche 1 bis 4, **dadurch gekennzeichnet, dass** die Beschichtung eine Dicke von höchstens 2 mm, vorzugsweise von höchstens 500 µm aufweist.

6. Duktiles Gussrohr nach einem der Ansprüche 1 bis 5, **dadurch gekennzeichnet, dass** der latexmodifizierte Zementmörtel ein Zementmörtel ist, der mit zumindest einem Latex modifiziert ist, der ausgewählt ist aus den Polyisoprenlatexen und den Polychloroprenlatexen.

7. Duktiles Gussrohr nach Anspruch 6, **dadurch gekennzeichnet, dass** der latexmodfizierte Zementmörtel ferner noch zumindest ein Melamin-Formaldehydharz aufweist.

8. Duktiles Gussrohr nach einem der Ansprüche 1 bis 7, **dadurch gekennzeichnet, dass** der latexmodfizierte Zementmörtel ferner noch zumindest einen Silan-Haftvermittler aufweist.

9. Verfahren zur Herstellung eines beschichteten duktilen Gussrohrs nach einem der Ansprüche 1 bis 8, das die folgenden Schritte aufweist, nämlich,
Bereitstellen eines duktilen Gussrohrs und
Beschichten zumindest eines Teils der inneren und/oder äußeren Mantelfläche des duktilen Gussrohrs mit dem latexmodifizierten Zementmörtel.

10. Verfahren nach Anspruch 9, **dadurch gekennzeichnet, dass** der latexmodifizierte Zementmörtel mit einem Verfahren aufgetragen wird, das ausgewählt ist aus der Gruppe bestehend aus den Sprühverfahren, insbesondere den "airless" Sprühverfahren, den Gussverfahren, insbesondere den Schleudergussverfahren und den Extrusionsverfahren.

11. Verfahren nach einem der Ansprüche 9 bis 10 **dadurch gekennzeichnet, dass** sich an den Schritt des Beschichtens ein Schritt des Umwickelns zumindest eines Teils des duktilen Gussrohrs mit einem Vliesstoffband oder einem Gewebeband, insbesondere einem Polymergewebeband anschließt.

12. Verwendung eines latexmodifizierten Zementmörtels zur Beschichtung von duktilen Gussrohren, wobei der latexmodifizierte Zementmörtel ein Zementmörtel auf Basis von Calcium-Aluminium-Zement ist, der bezogen auf 100 Massen-% Folgendes aufweist:
zumindest 5-35 Massen-% CaAl₂O₄,
zumindest 5-35 Massen-% Ca₃Al₂O₆,
mindestens 20 Massen-%eines anorganischen Füllstoffs,
ggf. ein oder mehrere weitere Aluminate, sowie
ggf. Hilfsstoffe, Nebenphasen und amorphe Anteile.

13. Verwendung nach Anspruch 12, **dadurch gekennzeichnet, dass** der latexmodifizierte Zementmörtel bezogen auf 100 Massen-% trockenen Zement 15-30 Massen-% CaAl₂O₄ aufweist.

14. Verwendung nach Anspruch 12 oder 13, **dadurch gekennzeichnet, dass** der latexmodifizierte Zementmörtel bezogen auf 100 Massen-% trockenen Zement 5-10 Massen-% Ca₃Al₂O₆ aufweist.

15. Verwendung nach einem der Ansprüche 12 bis 14, **dadurch gekennzeichnet, dass** der latexmodifizierte Zementmörtel bezogen auf 100 Massen-% trockenen Zement mindestens 40 und insbesondere 60-70 Massen-% des zumindest einen anorganischen Füllstoffs aufweist.

## Claims

1. Ductile cast iron pipe, **characterised in that** it has on at least some of the inner and/or outer lateral surface a coating consisting of a latex-modified cement mortar, wherein the latex-modified cement mortar is a cement mortar based on calcium-aluminium cement, which has the following in relation to 100 wt.% dry cement:
5-35 wt.% CaAl₂O₄,
5-35 wt.% Ca₃Al₂O₆,
at least 20 wt.% of an inorganic filler,
optionally one or more further aluminates, and also
optionally auxiliary agents, secondary phases and amorphous constituents.

2. Ductile cast iron pipe according to claim 1, **characterised in that** the latex-modified cement mortar has 15-30 wt.% CaAl₂O₄ in relation to 100 wt.% dry cement.

3. Ductile cast iron pipe according to claim 1 or 2, **characterised in that** the latex-modified cement mortar has 5-10 wt.% Ca₃Al₂O₆ in relation to 100 wt.% dry cement.

4. Ductile cast iron pipe according to any one of claims 1 to 3, **characterised in that** the latex-modified cement mortar has at least 40 and more particularly 60-70 wt.% of the at least one inorganic filler in relation to 100 wt.% dry cement.

5. Ductile cast iron pipe according to any one of claims 1 to 4, **characterised in that** the coating has a thickness of at most 2 mm, preferably of at most 500 µm.

6. Ductile cast iron pipe according to any one of claims 1 to 5, **characterised in that** the latex-modified cement mortar is a cement mortar which is modified with at least one latex, which is selected from the polyisoprene latexes and the polychloroprene latexes.

7. Ductile cast iron pipe according to claim 6, **characterised in that** the latex-modified cement mortar has furthermore at least one melamine-formaldehyde resin.

8. Ductile cast iron pipe according to any one of claims 1 to 7, **characterised in that** the latex-modified cement mortar has furthermore at least one silane adhesion promoter.

9. Method for producing a coated ductile cast iron pipe according to any one of claims 1 to 8, having the following steps, namely,
provision of a ductile cast iron pipe and
coating of at least some of the inner and/or outer lateral surface of the ductile cast iron pipe with the latex-modified cement mortar.

10. Method according to claim 9, **characterised in that** the latex-modified cement mortar is applied using a method selected from the group consisting of the spray methods, more particularly the "airless" spray methods, the casting methods, more particularly the centrifugal casting methods and the extrusion methods.

11. Method according to any one of claims 9 to 10 **characterised in that** the coating step is followed by a step in which a nonwoven tape or a woven-fabric tape, more particularly a woven-polymer-fabric tape, is wound round at least some of the ductile cast iron pipe.

12. Use of a latex-modified cement mortar for the coating of ductile cast iron pipes, wherein the latex-modified cement mortar is a cement mortar based on calcium-aluminium cement, which has the following in relation to 100 wt.%:
at least 5-35 wt.% CaAl₂O₄,
at least 5-35 wt.% Ca₃Al₂O₆,
at least 20 wt.% of an inorganic filler,
optionally one or more further aluminates, and also
optionally auxiliary agents, secondary phases and amorphous constituents.

13. Use according to claim 12, **characterised in that** the latex-modified cement mortar has 15-30 wt.% CaAl₂O₄ in relation to 100 wt.% dry cement.

14. Use according to claim 12 or 13, **characterised in that** the latex-modified cement mortar has 5-10 wt.% Ca₃Al₂O₆ in relation to 100 wt.% dry cement.

15. Use according to any one of claims 12 to 14, **characterised in that** the latex-modified cement mortar has at least 40 and more particularly 60-70 wt.% of the at least one inorganic filler in relation to 100 wt.% dry cement.

## Revendications

1. Tuyau en fonte ductile, **caractérisé en ce qu'**il comporte au moins sur une partie de la surface enveloppante intérieure et/ou extérieure un revêtement en un mortier de ciment modifié au latex, dans lequel le mortier de ciment modifié au latex est un mortier de ciment à base de ciment d'aluminate de calcium qui présente, par rapport à 100 % en masse de ciment sec :
5 à 35 % en masse de CaAl₂O₄,
5 à 35 % en masse de Ca₃Al₂O₆,
au moins 20 % en masse d'une matière de remplissage anorganique,
le cas échéant, un ou plusieurs autres aluminates, ainsi que
le cas échéant, des adjuvants, phases secondaires et ingrédients amorphes.

2. Tuyau en fonte ductile selon la revendication 1, **caractérisé en ce que** le mortier de ciment modifié au latex présente, par rapport à 100 % en masse de ciment sec, 15 à 30 % en masse de CaAl₂O₄.

3. Tuyau en fonte ductile selon la revendication 1 ou 2, **caractérisé en ce que** le mortier de ciment modifié au latex présente, par rapport à 100 % en masse de ciment sec, 5 à 10 % en masse de Ca₃Al₂O₆.

4. Tuyau en fonte ductile selon l'une quelconque des revendications 1 à 3, **caractérisé en ce que** le mortier de ciment modifié au latex présente, par rapport à 100 % en masse de ciment sec, au moins 40 et en particulier de 60 à 70 % en masse de l'au moins une matière de remplissage anorganique.

5. Tuyau en fonte ductile selon l'une quelconque des revendications 1 à 4, **caractérisé en ce que** le revêtement a une épaisseur de 2 mm au maximum, de préférence de 500 µm au maximum.

6. Tuyau en fonte ductile selon l'une quelconque des revendications 1 à 5, **caractérisé en ce que** le mortier de ciment modifié au latex est un mortier de ciment qui est modifié avec au moins un latex qui est choisi parmi les latex polyisoprènes et les latex polychloroprènes.

7. Tuyau en fonte ductile selon la revendication 6, **caractérisé en ce que** le mortier de ciment modifié au latex contient en outre au moins une résine mélamine-formaldéhyde.

8. Tuyau en fonte ductile selon l'une quelconque des revendications 1 à 7, **caractérisé en ce que** le mortier de ciment modifié au latex comporte en outre au moins un agent d'accrochage au silane.

9. Procédé de fabrication d'un tuyau en fonte ductile selon l'une quelconque des revendications 1 à 8, qui comprend les étapes suivantes, à savoir
préparation d'un tuyau en fonte ductile et
revêtement d'au moins une partie de la surface enveloppante intérieure et/ou extérieure du tuyau en fonte ductile avec le mortier de ciment modifié au latex.

10. Procédé selon la revendication 9, **caractérisé en ce que** le mortier de ciment modifié au latex est appliqué avec un procédé qui est choisi dans le groupe constitué des procédés de pulvérisation, en particulier des procédés de pulvérisation « sans air », des procédés de coulée, en particulier des procédés de coulée centrifuge, et des procédés d'extrusion.

11. Procédé selon l'une quelconque des revendications 9 à 10, **caractérisé en ce que** l'étape du revêtement est suivie d'une étape d'enroulement d'au moins une partie du tuyau en fonte ductile avec une bande de non-tissé ou une bande de tissu, en particulier une bande de tissu polymère.

12. Utilisation d'un mortier de ciment modifié au latex pour revêtir un tuyau de fonte ductile, dans laquelle le mortier de ciment modifié au latex est un mortier de ciment à base de ciment d'aluminate de calcium qui présente, par rapport à 100 % en masse :
au moins 5 à 35 % en masse de CaAl₂O₄,
au moins 5 à 35 % en masse de Ca₃Al₂O₆,
au moins 20 % en masse d'une matière de remplissage anorganique,
le cas échéant, un ou plusieurs autres aluminates, ainsi que
le cas échéant, des adjuvants, phases secondaires et ingrédients amorphes.

13. Utilisation selon la revendication 12, **caractérisée en ce que** le mortier de ciment modifié au latex présente, par rapport à 100 % en masse de ciment sec, 15 à 30 % en masse de CaAl₂O₄.

14. Utilisation selon la revendication 12 ou 13, **caractérisée en ce que** le mortier de ciment modifié au latex présente, par rapport à 100 % en masse de ciment sec, 5 à 10 % en masse de Ca₃Al₂O₆.

15. Utilisation selon l'une quelconque des revendications 12 à 14, **caractérisée en ce que** le mortier de ciment modifié au latex présente, par rapport à 100 % en masse de ciment sec, au moins 40 et en particulier de 60 à 70 % en masse de l'au moins une matière de remplissage anorganique.
